(19) Europäisches Patentamt / European Patent Office / Office européen des brevets

(11) **EP 3 238 911 B1**

(12) **FASCICULE DE BREVET EUROPEEN**

(45) Date de publication et mention
de la délivrance du brevet:
**12.12.2018 Bulletin 2018/50**

(21) Numéro de dépôt: **17305476.8**

(22) Date de dépôt: **28.04.2017**

(51) Int Cl.:
*B29C 49/78* (2006.01)   *B29C 49/80* (2006.01)
*B29C 49/00* (2006.01)   *B29C 49/06* (2006.01)
*B29C 49/12* (2006.01)   *B29C 49/22* (2006.01)
*B29C 49/36* (2006.01)   *B29C 49/48* (2006.01)
*B29K 67/00* (2006.01)   *B29L 31/00* (2006.01)
*B29K 23/00* (2006.01)   *B29K 105/00* (2006.01)

(54) **PROCEDE DE FORMAGE DE RECIPIENTS A PAROIS MULTIPLES**

FORMVERFAHREN VON MEHRWANDIGEN BEHÄLTERN

METHOD FOR FORMING MULTI-WALL CONTAINERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.04.2016 FR 1653804**

(43) Date de publication de la demande:
**01.11.2017 Bulletin 2017/44**

(73) Titulaire: **Sidel Participations**
**76930 Octeville-sur-Mer (FR)**

(72) Inventeurs:
• **ANDRIEUX, David**
**76930 Octeville-sur-mer (FR)**

• **HOMONT, Sébastien**
**76930 Octeville-sur-mer (FR)**
• **LECLERC, Laurent**
**76930 Octeville-sur-mer (FR)**
• **LEMAISTRE, Elisabeth**
**76930 Octeville-sur-mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
WO-A1-2016/009131   DE-A1-102004 061 230
JP-A- S57 128 518   US-A1- 2006 121 152

## Description

L'invention concerne la fabrication des récipients à parois multiples, par soufflage de préformes.

Un récipient à parois multiples est un récipient comprenant au moins deux parois, à savoir une paroi externe relativement rigide et une paroi interne, souple, qui peuvent être réalisées dans le même matériau mais sont généralement réalisées dans des matériaux différents. La paroi externe peut ainsi être réalisée en polytéréphtalate d'éthylène (PET), tandis que la paroi interne peut être réalisée en polypropylène (PP).

Des procédés apparentés, de formage de tels récipients, sont décrits dans les documents WO2016/009131, JPS57128518A et US2006/121152A1.

Un premier type de récipient connu avec des parois multiples est le type connu sous l'appellation de récipients multicouches. Un tel récipient comprend au moins deux parois, l'une, externe, conférant de la rigidité à l'ensemble, et une autre, interne, ou bien encore une paroi externe, une paroi interne et au moins une paroi intermédiaire entre la paroi externe et la paroi interne. La paroi interne et, le cas échéant, la ou les parois intermédiaires ont pour rôle d'optimiser les propriétés barrières à certains gaz ou constituants du contenu du récipient lorsque la paroi externe ne peut remplir cette fonction à elle seule. Dans ce type de récipient, deux parois voisines sont intimement fixées l'une à l'autre

Un second type de récipient connu comporte seulement deux parois. Il est ordinairement employé dans le stockage (de grande capacité) et la distribution de liquides sous pression (typiquement bière, limonade). Le contenu (liquide) est stocké dans le volume défini par la paroi interne du récipient. Un gaz sous pression (par ex. de l'air) est injecté par un orifice formé dans la paroi externe dans un interstice formant une chambre ménagée entre les deux parois, pour comprimer la paroi interne et ainsi forcer le liquide à sortir du récipient. Ce type de récipient équipe par exemple les tireuses (ou pompes) dans les bars.

Un exemple de récipient de ce second type est décrit dans la demande de brevet américain US 2015/0108077 (Dispensing Technologies B.V.).

Un récipient avec des parois multiples est généralement fabriqué par soufflage ou étirage soufflage d'une préforme chaude (c'est-à-dire une préforme dont les parois, à l'exception de son col sont au-dessus de la température de transition vitreuse de leur matériau constitutif) dans un moule à l'empreinte du récipient. La préforme possède un corps de forme sensiblement cylindrique, qui s'étend suivant un axe principal, un fond possédant une forme sensiblement hémisphérique, qui ferme le corps à une première extrémité de celui-ci, et un col ouvert qui s'étend à une extrémité opposée à la première.

Une préforme destinée à la fabrication d'un récipient à parois multiples comprend le même nombre de parois que le récipient, à savoir au moins deux parois accolées l'une à l'autre, l'une, externe, conférant de la rigidité à l'ensemble, et une paroi interne ou bien encore une paroi externe, une paroi interne et au moins une paroi intermédiaire entre la paroi externe et la paroi interne..

La préforme peut être obtenue par injection multi-matières des parois (notamment par co-injection). C'est notamment le cas pour les préformes destinées à des récipients multicouches où deux parois voisines sont intimement fixées l'une à l'autre.

Pour les récipients à deux parois du type de celui décrit dans la demande de brevet américain US 2015/0108077, la préforme peut être obtenue en déroulant un procédé évitant que les deux parois n'adhèrent entre elles, soit par co-injection, soit par injection indépendante de la paroi externe et de la paroi interne, puis par un assemblage ultérieur de ces deux parties. Quel que soit le mode de fabrication (co-injection multi-matières ou assemblage ultérieur) de la préforme destinée à des récipients de ce type, il est mis en oeuvre une étape de fixation intime d'une zone périphérique annulaire extérieure de la paroi interne et d'une zone périphérique annulaire intérieure de la paroi externe sous le col, afin de constituer une étanchéité au niveau de cette zone annulaire.

Toujours, pour les récipients à deux parois du type de celui décrit dans la demande de brevet américain US 2015/0108077, la paroi externe de la préforme est pourvue dès sa fabrication du susdit orifice qui se trouve sur le récipient fini et par lequel est injecté le gaz sous pression servant à comprimer la paroi interne pour forcer le liquide à sortir du récipient.

Lors de la fabrication, par soufflage des récipients multicouches, les parois successives doivent rester plaquées l'une contre l'autre en permanence.

Dans le cas des récipients à deux parois, dans lesquels un gaz sous pression (par ex. de l'air) doit être injecté dans l'interstice existant entre les deux parois, lors du soufflage, les parois restent plaquées l'une contre l'autre lorsque le récipient se forme correctement. En d'autres termes, la face externe de la paroi interne vient épouser la face interne de la paroi externe sans toutefois que les parois adhèrent l'une à l'autre, à l'exception d'une zone périphérique, située sous le col de la préforme, où les deux parois sont fixées de façon étanche l'une à l'autre. Ainsi, lorsque le récipient est formé, un interstice est constitué entre les deux parois dans lequel un gaz peut être injecté par l'orifice ménagé dans la paroi externe afin de former une chambre. Comme il sera expliqué ultérieurement, l'interstice, donc la chambre, reste vide lorsque le récipient se forme correctement.

Le moule de fabrication d'un récipient à parois multiples comprend ordinairement deux demi-moules mobiles l'un par rapport à l'autre (soit articulés, soit déplaçables) entre une position ouverte, dans laquelle les demi-moules sont écartés l'un de l'autre, et une position fermée dans laquelle les demi-moules sont rapprochés puis verrouillés l'un à l'autre. Les demi-moules déterminent l'empreinte du corps du récipient et parfois également celle du fond.

Toutefois, dans de nombreux cas, le moule comprend en outre un fond de moule qui est mobile axialement relativement aux demi-moules. En position ouverte, le fond de moule est éloigné axialement des demi-moules ; en position fermée, il est rapproché axialement et verrouillé relativement aux demi-moules. Les demi-moules déterminent l'empreinte du corps du récipient et le fond de moule détermine celle du fond du récipient ; sa présence facilite le démoulage des récipients possédant des fonds de forme complexe.

Après mise en place de la préforme préalablement chauffée dans le moule, celui-ci est verrouillé en position fermée. Un gaz sous haute pression (typiquement de l'air) est injecté dans la préforme au travers de l'ouverture ménagée dans son col, ce qui provoque la déformation simultanée de la paroi interne (par gonflage de celle-ci sous la pression exercée directement par le gaz) et de la paroi externe (et, le cas échéant des parois intermédiaires) sous la poussée exercée par la paroi interne, jusqu'à ce que la paroi externe vienne se plaquer contre le moule. Le soufflage à haute pression (la phase lors de laquelle le gaz est injecté) peut être précédé d'un pré-soufflage et/ou être accompagné d'un étirage à l'aide d'une tige d'élongation qui est descendue dans le volume de la préforme délimité par la paroi interne. On obtient donc un récipient fini dans lequel les parois sont plaquées l'une contre l'autre. Puis il est procédé à un dégazage du récipient formé, qui consiste dans ce cas en un dégazage du volume délimité par la paroi interne, accompagné de la sortie, par remontée, de la tige. Après une temporisation prédéterminée, présumée nécessaire à l'égalisation des pressions à l'intérieur et à l'extérieur du récipient, le moule est ouvert et le récipient évacué du moule.

Dans la suite de la description, le terme "soufflage" sera employé indifféremment pour désigner une technologie de transformation d'une préforme en récipient mettant en oeuvre un processus de soufflage à haute pression, éventuellement précédé d'un pré-soufflage et accompagne ou pas d'un étirage, à moins qu'une distinction ne soit nécessaire, auquel cas celle-ci sera effectuée.

Tant que la préforme ne présente aucun défaut, cette procédure est sans risque : à l'issue de la fabrication, les parois restent effectivement plaquées l'une contre l'autre. Mais il arrive que la paroi interne soit affectée d'un défaut, comme une fissure, une craquelure, un trou. Un tel défaut peut provenir de la fabrication de la préforme ou d'une mauvaise manipulation pendant son stockage ou son transport. Quoi qu'il en soit, la présence d'un défaut dans la préforme peut avoir des conséquences dévastatrices : on déplore en effet des cas d'endommagement, voire de destruction complète du moule lors de son ouverture.

L'analyse montre qu'un tel phénomène d'endommagement ou de destruction est la conséquence du fait que, lors du soufflage, du gaz sous pression parvient parfois à s'introduire entre la paroi interne et la paroi externe (ou la paroi intermédiaire attenant à la paroi interne dans le cas de récipients multicouches) en passant par le trou (ou la fissure ou la craquelure) qui, le cas échéant, s'agrandit. On assiste alors à une délamination des parois, quand bien même les parois sont censées être adhérentes entre elles, comme c'est le cas des récipients multicouches, et à la création d'une chambre à l'extérieur de la paroi interne.

Aussi, les parois, au lieu de rester plaquées l'une contre l'autre, s'éloignent, de sorte qu'un volume non négligeable de gaz sous pression parvient dans la chambre qui se crée ainsi.

Ce gaz ne parvient pas ou pas totalement à s'évacuer lors du temps normalement imparti pour le dégazage au travers du trou (ou la fissure ou la craquelure) qu'il s'agisse de récipients multicouches ou à deux parois ; de même il ne parvient pas non plus à s'échapper par l'orifice ménagé dans la paroi externe des récipients qui sont pourvus d'un tel orifice.

A l'issue de la temporisation prévue pour le dégazage, il subsiste donc un volume notable de gaz sous pression emprisonné entre deux parois de sorte qu'une ouverture du moule dans ces conditions provoque une brusque détente du gaz ainsi emprisonné et une onde de choc ayant pour conséquence l'endommagement ou la destruction précitée, avec des risques importants pour les opérateurs ou les personnes se trouvant à proximité de la machine de fabrication. Il convient encore de noter que, lorsque le formage s'effectue par étirage-soufflage, l'introduction du gaz entre deux parois peut par ailleurs provoquer un resserrement de la paroi interne sur la tige empêchant son retrait et ajoutant à la l'endommagement.

Pour écarter ce danger pour l'installation et pour les hommes, on a d'abord tenté de minimiser les risques de défaut sur les préformes. Cependant, compte tenu des cadences de production, même en réduisant la probabilité de défaut, le risque d'endommagement ou de destruction demeure élevé : en l'espèce, un cas tous les dix jours de production.

Un premier objectif est de réduire le risque de destruction (ou d'endommagement grave) d'un moule, en raison d'un défaut affectant une préforme à parois multiples, en agissant directement sur le processus de fabrication des récipients.

Un deuxième objectif est, ce faisant, de préserver l'intégrité de l'installation et des personnels.

A cet effet, il est proposé un procédé de formage d'un récipient par soufflage à partir d'une préforme à parois multiples en matière plastique, ce procédé comprenant :

- une opération de mise en place de la préforme dans un moule à l'empreinte du récipient, ce moule comprenant au moins deux demi-moules pouvant occuper une position fermée dans laquelle les demi-moules sont assemblés ;

- une opération de verrouillage des demi-moules en position fermée ;
- une phase de soufflage consistant à mettre l'intérieur de la préforme en communication avec une source de gaz sous pression, pendant une durée prédéterminée pour former le récipient, par application d'au moins une pression de soufflage ;
- une phase de dégazage, débutant à un instant de début de dégazage, et consistant en la mise en communication du volume intérieur du récipient ainsi formé, au travers de l'ouverture ménagée dans son col, avec un milieu à la pression ambiante afin de ramener la pression dans le récipient à la pression ambiante ;
- une mesure continue de la pression régnant au niveau du col pendant la phase de dégazage ;
- la détermination de la durée écoulée entre le début du dégazage et l'atteinte d'une pression de référence au niveau du col ;
- la comparaison de la durée écoulée avec une durée théorique à partir de laquelle la pression au niveau du col atteint en théorie la pression de référence ;
- le maintien du verrouillage du moule si la durée écoulée est inférieure à la durée théorique.

Par "mesure de pression au niveau du col", il faut entendre une mesure de la pression dans l'environnement qui contient le col, afin que la mesure ne soit pas perturbée par une éventuelle déformation de la paroi interne : ainsi, il peut s'agir d'une mesure de la pression régnant dans la tuyère de soufflage (laquelle mesure s'avère être la plus aisée à mettre en oeuvre) ou bien d'une mesure avec une sonde insérée dans l'ouverture du col (qui nécessiterait un appareillage un peu plus complexe).

De la sorte, on évite l'endommagement, voire la destruction, du moule, qui surviendrait si un déverrouillage prématuré était effectué. En effet, la pression qui est mesurée est celle de l'air contenu dans la cavité interne, en d'autres termes la cavité qui est déterminée par l'intérieur de la paroi interne. Deux récipients correctement formés, c'est-à-dire dont la paroi interne est intacte, nécessiteront sensiblement la même durée de dégazage entre le début du dégazage et l'atteinte de la pression de référence.

Par contre, si la paroi interne d'un récipient est détériorée et qu'un volume significatif de gaz s'est introduit dans l'interstice ménagé entre deux parois, provoquant la formation d'une chambre entre ces deux parois, l'air de soufflage se sera réparti entre la cavité interne, qui contiendra beaucoup moins d'air que celle d'un récipient correctement formé, et la chambre. En conséquence, la cavité interne, contenant moins d'air, se dégazera plus rapidement et la pression de référence sera atteinte plus rapidement.

Ainsi, en mesurant une durée écoulée d'au moins une partie du dégazage de la cavité interne, il est possible d'anticiper l'occurrence d'un problème : la mesure d'une durée inférieure à une durée théorique pour décroître de la pression de soufflage à la pression de référence signifie très vraisemblablement qu'il y a un problème. Tant l'installation que les personnels s'en trouvent ainsi protégés.

Selon d'autres caractéristiques :

- la pression de référence est la pression ambiante ;
- la pression de référence est comprise entre la pression de soufflage et la pression ambiante ;
- la pression de référence est une pression, déterminée de façon théorique, à partir de laquelle il est possible d'ouvrir le moule sans risque de détérioration de ce dernier ;

Les opérations supplémentaires suivantes peuvent être prévues, si la durée écoulée est inférieure à la durée théorique :

- il est provoqué la génération d'un signal d'alerte.
- il est provoqué un arrêt d'urgence de l'unité de formage de récipients ;
- le maintien du verrouillage du moule est assuré pendant une temporisation prédéterminée, avantageusement supérieure ou égale à 30 secondes, et par ex. de l'ordre d'une minute ;
- à la fin de la temporisation, le déverrouillage du moule ;
- le récipient comprenant une paroi interne et une paroi externe, cette dernière étant pourvue d'un orifice de mise en communication avec l'extérieur, si la durée écoulée est inférieure à la durée théorique, la pression à l'orifice est mesurée et lorsque la pression à l'orifice atteint la pression de référence un ordre de déverrouillage du moule est donné ;
- le récipient comprenant une paroi interne et une paroi externe, cette dernière étant pourvue d'un orifice de mise en communication avec l'extérieur, si la durée écoulée est inférieure à la durée théorique, il est mesuré le débit du gaz sortant de l'orifice et lorsque ce débit devient nul, un ordre de déverrouillage du moule est donné.

D'autres objets et avantages de l'invention apparaîtront à la lumière de la description d'un mode de réalisation, faite ci-après en référence aux dessins annexés dans lesquels :

- la figure 1 est une vue schématique, de dessus, d'une unité de formage de récipients ;
- la figure 2 est une vue schématique en coupe montrant un moule dans lequel est positionnée une préforme à parois multiples ;
- la figure 3 est une vue similaire à la figure 2, montrant un récipient correctement formé dans le moule ;
- la figure 4 est une vue similaire à la figure 3, montrant un récipient mal formé en raison d'un défaut ayant affecté la préforme ;

- la figure 5 est un diagramme illustrant différentes étapes du procédé de fabrication du récipient ;
- la figure 6 est un diagramme illustrant les variations de pression au cours du formage du volume délimité par la paroi interne d'un récipient normal et d'un récipient défectueux, en fonction du temps.

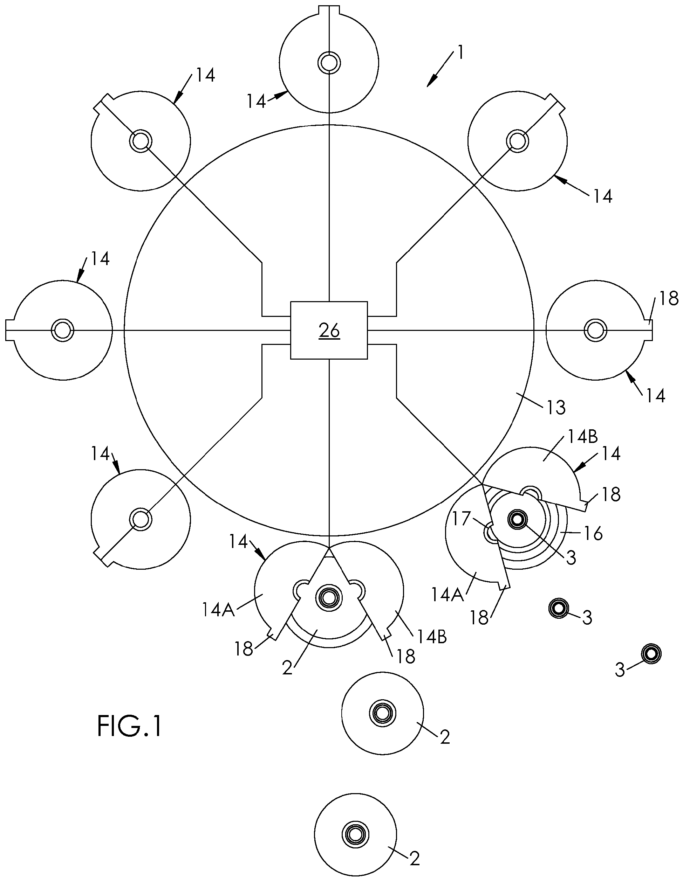

Sur la figure 1 est représentée une unité **1** de formage de récipients **2** par soufflage ou étirage soufflage à partir de préformes **3** à parois multiples en matière plastique.

L'expression « parois multiples » signifie que la préforme **3** et donc le récipient **2** comprennent au moins deux parois, à savoir une paroi **4** interne et une paroi **5** externe distinctes, qui peuvent être réalisées dans deux matières différentes. Entre ces deux parois on peut trouver une ou plusieurs parois intermédiaires, comme c'est le cas dans des récipients multicouches.

Dans le cas de récipients à deux parois, du type de celui décrit dans la demande de brevet américain US 2015/0108077, la paroi **5** externe, destinée à former une enveloppe relativement rigide du récipient **2**, est avantageusement réalisée dans un polyester, par ex. en polytéréphtalate d'éthylène (PET), tandis que la paroi 4 interne, destinée à former un sachet relativement plus souple interne au récipient **2**, est par exemple réalisée dans une polyoléfine, par ex. en polypropylène (PP).

Par commodité, on emploie dans ce qui suit la même référence numérique pour désigner la paroi **4** interne (respectivement la paroi **5** externe) dans la préforme **3** et dans le récipient **2**.

La préforme **3** comprend un corps **6** de forme sensiblement cylindrique, qui s'étend suivant un axe **X** principal, un fond **7** de forme sensiblement hémisphérique qui ferme le corps **6** à une extrémité inférieure de celui-ci, et un col **8** ouvert qui s'étend à une extrémité supérieure du corps **6**, opposée au fond **7**. Le col **8** est séparé du corps **6** par une collerette **9** qui permet d'assurer la sustentation de la préforme **3**, notamment lors de son transport et lors du formage du récipient **2**.

La préforme **3** peut être obtenue par injection multi-matières des parois, par exemple par co-injection ou par injection multicouche séquentielle. Elle peut encore être obtenue par injection indépendante de la paroi externe et de la paroi interne et, le cas échéant des parois intermédiaires, puis par un assemblage ultérieur de ces parties.

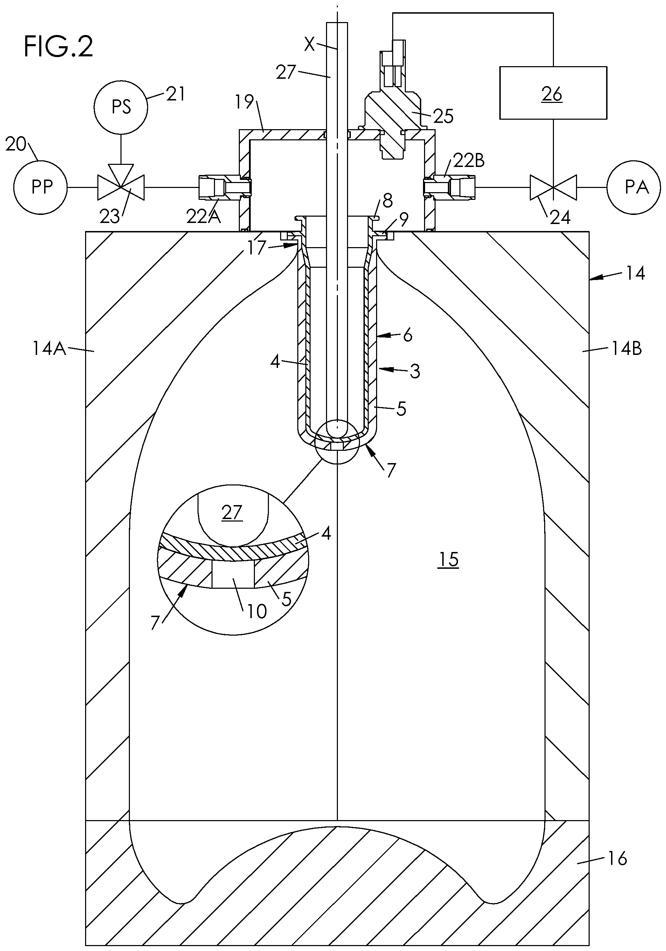

Quel que soit le mode d'obtention de la préforme, lorsque celle-ci est destinée à des récipients du type de celui décrit dans la demande de brevet américain US 2015/0108077, il est mis en oeuvre une étape de fixation étanche entre une zone périphérique annulaire extérieure de la paroi interne et une zone périphérique annulaire intérieure de la paroi externe située sous le col **8**, afin de constituer une étanchéité au niveau de cette zone annulaire. Dans l'exemple illustré à la figure 2, la paroi **5** externe forme l'extérieur du corps **6**, du fond **7** et une partie inférieure de la collerette **9**, tandis que la paroi **4** interne forme l'intérieur du corps **6** et du fond **7**, une partie supérieure de la collerette **9** et le col **8**, et les deux parois sont fixées de façon étanche à proximité de la collerette. Le col **8**, au lieu d'être constitué sur la paroi **4** interne, pourrait l'être sur la paroi **5** externe.

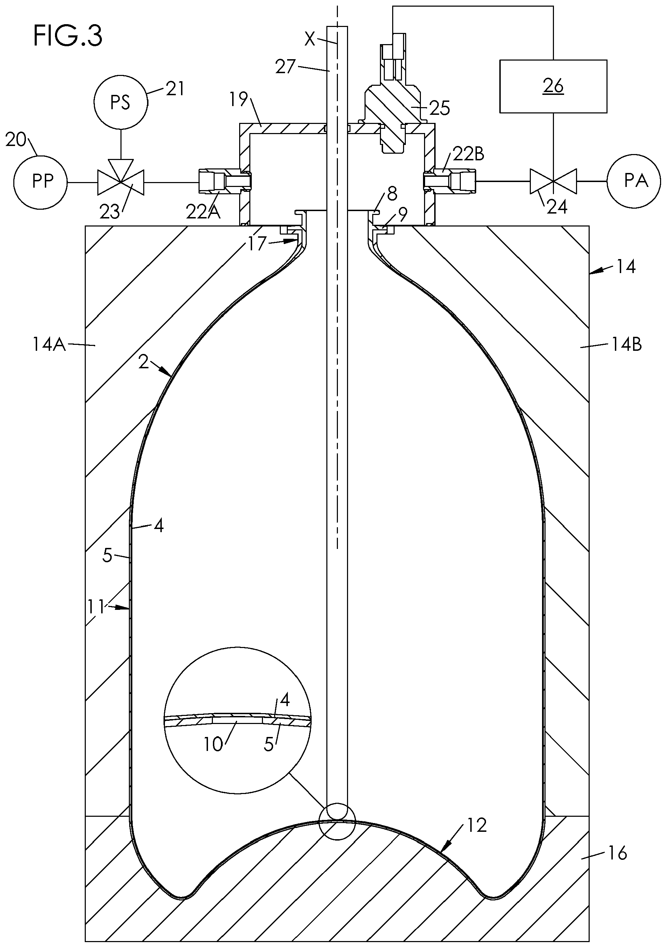

Selon le mode illustré de réalisation, qui concerne la fabrication d'un récipient à deux parois, la paroi **5** externe de la préforme est pourvue dès sa fabrication d'un orifice **10**, qui est illustré sur la préforme **3** dans le médaillon de détail de la figure 2 et sur le récipient **2** dans le médaillon de détail de la figure 3. Par cet orifice **10** est destiné à être injecté un gaz de propulsion (tel que de l'air,) entre la paroi **4** interne et la paroi **5** externe pour déformer la paroi **4** interne et ainsi forcer le produit qui y est contenu à sortir sous pression par le col **8**. Dans l'exemple illustré, l'orifice **10** est ménagé au centre du fond **7** de la paroi **5** externe de la préforme **3**, de façon à se retrouver au centre du fond **12** de la paroi **5** externe du récipient **2** fini.

Le récipient **2** comprend un corps **11**, obtenu par déformation des parois **4**, **5** constitutives de son corps **6**, un fond **12** qui s'étend à une extrémité inférieure du corps **11** et est obtenu par déformation du fond **7** de la préforme **3** et, à une extrémité supérieure du corps **11** opposée au fond **12**, le col **8** et la collerette **9** issus de la préforme **3** et demeurés inchangés au cours du formage du récipient **2**.

L'unité **1** de formage, également appelée souffleuse, se présente ici sous forme d'un carrousel et comprend un support **13** tournant, également appelée roue, et une pluralité de moules **14**, chacun à l'empreinte d'un récipient **2**, montés côte à côte sur la roue **13**.

Chaque moule **14** peut être du type portefeuille et comprendre deux demi-moules, à savoir un demi-moule **14A** gauche et un demi-moule **14B** droit, articulés l'un par rapport à l'autre entre une position fermée dans laquelle les demi-moules **14A**, **14B** sont assemblés pour définir conjointement une cavité **15** à l'empreinte du corps **11** du récipient **2**, et un fond **16** de moule à l'empreinte du fond **12** du récipient **2**. Au lieu de comporter des moules en portefeuille, l'unité **1** de formage pourrait comporter des moules mobiles en translation l'un par rapport à l'autre, donc susceptibles de s'écarter ou de se rapprocher, puis d'être verrouillés en position rapprochée.

A une extrémité supérieure, le moule **14** définit une ouverture **17** au bord de laquelle la préforme **3** est suspendue par sa collerette **9** pendant le formage du récipient **2**. Chaque moule **14** est équipé d'un mécanisme **18** de verrouillage des demi-moules **14A**, **14B** en position fermée. Ce mécanisme **18** peut être à commande électrique, magnétique, pneumatique, hydraulique ou encore mécanique.

Comme illustré sur les figures 2, 3 et 4, l'unité **1** de formage comprend, pour chaque moule **14**, une tuyère **19** apte à venir s'appliquer de manière étanche contre le moule **14** autour de l'ouverture **17**. Cette tuyère **19** est reliée à au moins une source **20**, **21** de gaz sous pression. Dans l'exemple illustré, la tuyère **19** est reliée, par l'intermédiaire d'un raccord **22A**, à une source **20** de gaz, typiquement de l'air, à une pression **PP** dite de pré-soufflage, comprise entre 5 et 20 bars, et à une source **21** de gaz (qui peut également être de l'air) à une pression **PS** dite de soufflage supérieure à la pression **PP** de pré-soufflage, et comprise typiquement entre 20 et 40 bars.

Comme on le voit également sur les figures 2, 3 et 4, la mise en communication de la tuyère **19** avec les sources **20**, **21** de gaz peut se faire via une électrovanne **23** (par ex. une électrovanne trois voies).

De même, la tuyère **19** est reliée à l'extérieur de l'unité **1** de formage, autrement dit à l'air libre, où règne une pression ambiante (notée **PA**), typiquement la pression atmosphérique, également via une électrovanne **24** et un raccord **22B**, ou via un distributeur, auquel est adjoint le plus souvent un silencieux d'échappement. La représentation faite sur les figures 2, 3 et 4 n'est que schématique ; la tuyère **19** pourrait être reliée aux sources **20**, **21** de gaz et à l'ambiance extérieure (l'atmosphère) non pas via plusieurs électrovannes **23**, **24** distinctes mais via un unique distributeur fluidique et un unique raccord.

Par ailleurs, l'unité **1** de formage comprend, pour chaque moule **14**, un capteur **25** de pression propre à mesurer la pression dans la tuyère **19**, et donc dans la préforme **3** puis le récipient **2** pendant le formage de celui-ci. Le capteur **25** de pression est par exemple monté sur la tuyère **19** et assure aussi une mesure de la pression régnant au niveau du col **8** de la préforme **3**.

L'unité **1** de formage comprend, enfin, une unité **26** de contrôle informatisée, à laquelle est relié le capteur **25** de pression dont elle collecte les mesures, et qui est programmée pour commander notamment les électrovannes **23**, **24** ou le distributeur et le mécanisme **18** de verrouillage de chaque moule **14.**

Le formage d'un récipient **2** est réalisé comme suit.

Une première opération consiste à charger dans le moule **14** ouvert la préforme **3**, préalablement chauffée à une température supérieure à la température de transition vitreuse de la préforme **3** (lorsque celle-ci est mono matière) ou à la plus élevée des températures de transition vitreuse des différentes matières composant les parois **4**, **5** (lorsque la préforme **3** est multi matières).

Une deuxième opération consiste à fermer le moule **14**, une troisième à le verrouiller en position fermée.

Puis la tuyère **19** est amenée au contact étanche du moule **14.**

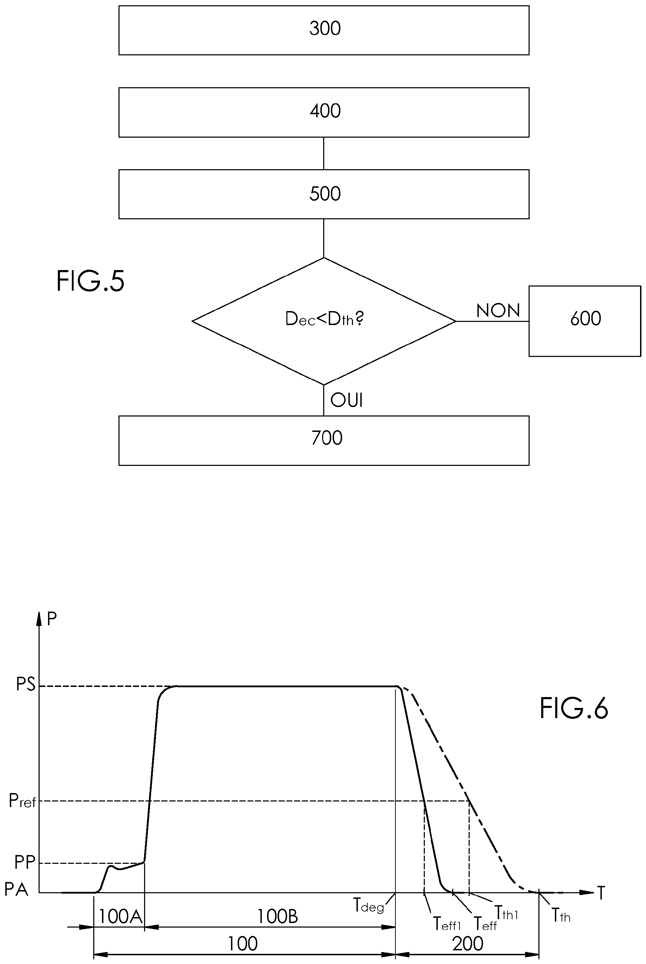

Sur la figure 6 est représenté un diagramme illustrant les variations de pression P au cours du formage d'un récipient normal et d'un récipient défectueux, en fonction du temps T.

Après amenée en contact étanche de la tuyère **19** avec le moule **14**, intervient une phase **100** de soufflage de la préforme **3** qui consiste à mettre l'intérieur de la préforme **3** (l'intérieur du col et de la paroi interne) en communication avec la (ou successivement les) source(s) **20**, **21** de gaz sous pression afin de la transformer en récipient **2.** Dans l'exemple illustré sur la figure 6, la phase de soufflage comprend une étape **100A** de pré-soufflage, lors de laquelle l'intérieur de la préforme **3** est d'abord mis en communication, via l'électrovanne **23** (ou le distributeur), avec la source **20** de gaz à une pression **PP** de pré-soufflage. L'étape **100A** de pré-soufflage est suivie d'une étape **100B** de soufflage lors de laquelle la préforme **3** est mise en communication, via l'électrovanne **23** (ou le distributeur), avec la source **21** de gaz à la pression **PS** de soufflage. Il est important de rappeler à ce stade que l'étape **100A** de pré-soufflage n'est pas obligatoire et que la phase **100** de soufflage peut consister simplement en l'étape **100B** de soufflage.

Cette phase **100** de soufflage peut avantageusement inclure un étirage de la préforme **3**, au moyen d'une tige **27** d'étirage coulissant dans le moule **14** parallèlement à l'axe **X** principal. De manière connue en soi, l'instant du commencement de l'étirage est déterminé lors de la mise au point de la machine, en fonction des caractéristiques du récipient.

La phase **100** de soufflage est suivie d'une phase **200** de dégazage du récipient **2**, initiée à un instant **Tdeg** de début de dégazage, et comprenant l'arrêt du soufflage et la mise en communication du récipient **2** ainsi formé avec un milieu à la pression ambiante, par exemple la pression atmosphérique, (notée **PA**), via l'électrovanne **24** commandée par l'unité **26** de contrôle. Le milieu à la pression **PA** ambiante est typiquement le local où est installée l'unité **1** de formage, ce local communicant avec l'air libre.

La phase **200** de dégazage peut inclure une étape de balayage, qui consiste à mettre, via des orifices ménagés dans la tige **27** d'étirage, le récipient **2** en communication avec une source de gaz à une pression de balayage, intermédiaire entre la pression **PP** de pré-soufflage et la pression **PS** de soufflage. Par souci de commodité, le graphique de la figure 6 illustre un dégazage dépourvu de balayage.

Lorsque la paroi **4** interne de la préforme **3** est dépourvue de défaut (c'est-à-dire de fissure, de craquelure ou de perforation), comme illustré sur la figure 3, il n'existe aucune communication entre le volume délimité par la paroi **4** interne et l'interface entre les parois **4**, **5** qui demeurent en contact pendant le soufflage. Dans ce cas, le volume délimité par la paroi **4** interne est nominal et son dégazage complet est achevé à un instant correspondant à ou proche d'un instant théorique **Tth** ou nominal. En d'autres termes, la durée du dégazage du récipient **2** est très proche de ou équivalente à une durée théorique (ou optimale), notée **Dth** dont la valeur vérifie l'égalité suivante :

$$Dth = Tth - Tdeg.$$

Dans un tel cas, à partir de l'instant théorique **Tth**, il est possible d'ouvrir le moule sans risque afin d'en extraire le récipient formé.

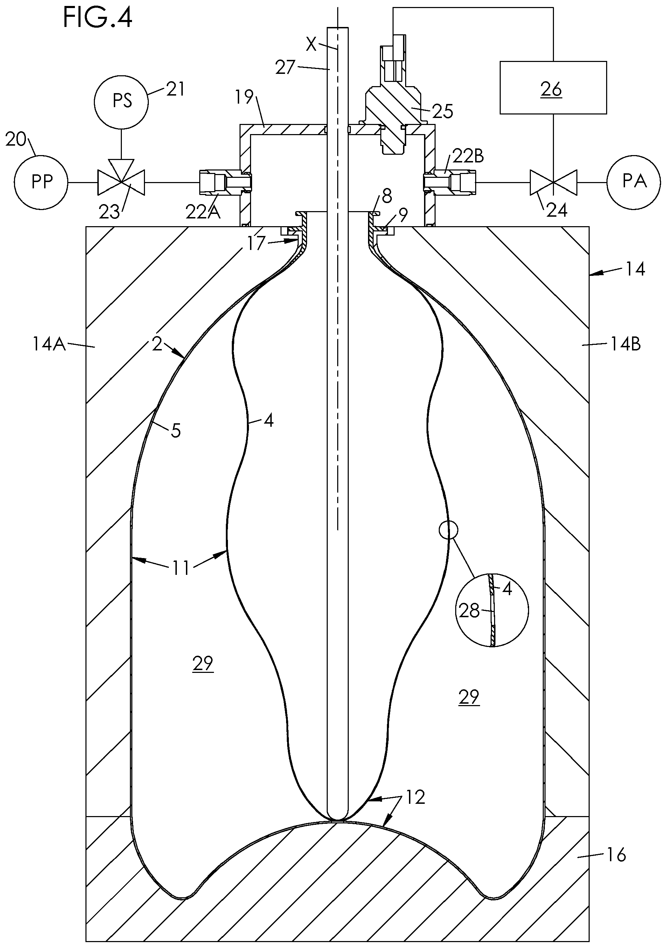

En revanche, lorsque la paroi **4** interne est craquelée, fendue ou encore percée, ceci se traduit par l'apparition d'une lumière **28**, illustrée dans le médaillon de détail de la figure 4, qui peut s'élargir au cours du formage et par laquelle le gaz injecté dans le récipient **2** au cours du soufflage parvient parfois à s'introduire entre les parois **4**, **5**, ou entre la paroi **5** externe et une paroi intermédiaire, pour finir par former une chambre **29** sous pression entre elles. Ce phénomène est d'autant plus accentué avec les préformes à deux parois destinées à former des récipients du type décrit dans la demande de brevet américain US 2015/0108077 où, de façon voulue afin de faciliter la vidange de la poche formée par la paroi **4** interne au cours de l'utilisation du récipient **2**, les parois **4**, **5** ne sont pas ou peu adhérentes entre elles. Dans le cas des récipients multicouches, ce phénomène est plus rare, mais on peut néanmoins aboutir à la création d'une chambre entre la paroi **4** interne et une paroi intermédiaire attenante, si un délaminage survient entre ces deux parois alors que la paroi **4** interne est détériorée.

Il serait extrêmement dangereux, dans ces conditions, d'ouvrir le moule à la fin supposée de la phase de dégazage.

En effet, lorsqu'une chambre **29** se forme entre la paroi **4** interne et la paroi **5** externe ou entre la paroi **5** externe et une paroi intermédiaire attenante en raison de la présence d'une lumière **28** dans la paroi **4** interne, le volume intérieur limité par la paroi **4** interne est réduit par rapport à celui d'un récipient sans défaut. Ce volume se dégaze donc naturellement plus rapidement que celui d'un récipient sans défaut. Il convient en outre de noter que la pression régnant dans la chambre **29** accélère le dégazage du volume intérieur limité par la paroi **4** interne, dans la mesure où cette pression tend à comprimer la paroi **4** interne et à favoriser le dégazage de ce volume intérieur. La fin du dégazage du volume intérieur limité par la paroi **4** interne est ainsi réalisée à un instant effectif **Teff** survenant significativement plus rapidement que l'instant théorique **Tth.** Ce dégazage est illustré par la portion de courbe en trait plein à droite de la figure 6, commençant à l'instant **Tdeg** de début de dégazage et s'achevant à l'instant effectif **Teff.**

Par ailleurs, dans un tel cas de défaut de fabrication, lors du dégazage du volume intérieur limité par la paroi **4** interne, la paroi **4** interne peut s'effondrer sur elle-même, voire sur la tige **27**, sous la pression régnant dans la chambre **29**, ce qui peut avoir pour conséquence une obturation de la lumière **28** et un blocage ou un ralentissement notable de la vidange de la chambre **29**, dans laquelle il peut subsister une pression résiduelle élevée bien au-delà de l'instant théorique **Tth.**

Il convient de noter en outre que, dans le cas de récipients à deux parois présentant un orifice **10** dans la paroi **5** externe, l'orifice **10** ne contribue aucunement à permettre à l'air sous pression contenu dans la chambre **29** de s'échapper rapidement de celle-ci car ses dimensions sont faibles.

Pour que l'air sous pression contenu dans la chambre **29** puisse s'échapper rapidement de celle-ci et que le risque soit atténué voire supprimé, quel que soit le type de récipient, il faudrait que la lumière **28** se soit agrandie lors du soufflage jusqu'à atteindre des dimensions telles qu'elle offre un débit de fuite vers le volume interne au moins équivalent au débit de fuite offert par le col vers la tuyère **19.**

On comprend que le simple déverrouillage du moule **14** peut provoquer sa destruction ou, à tout le moins, son endommagement dès lors que la paroi **5** externe sous pression ne rencontre plus de résistance.

Afin d'éviter que cette situation n'advienne, et comme illustré sur la figure 5, le procédé de formage comprend les opérations suivantes, conduites par l'unité **26** de contrôle :

- (**300**) mesure, au moyen du capteur **25**, de la pression (notée **P**) régnant au niveau du col **8** au moins pendant la phase de dégazage ;
- (**400**) détermination de la durée écoulée **Dec** entre l'instant **Tdeg** de début du dégazage et un instant **Teff1** ou **Teff**) auquel une pression de référence **Pref** ou **PA** est atteinte au niveau du col **8** ;
- (**500**) comparaison de la durée écoulée **Dec** avec une durée théorique **Dth** à partir de laquelle la pression au niveau du col atteint en théorie la pression de référence **Pref** ou **PA** ;
- (**600**) si la durée écoulée **Dec** est égale ou supérieure à la durée théorique **Dth**, témoignant du caractère nominal du déroulement du dégazage (cf. la portion de courbe en trait mixte sur la figure 6) le déverrouillage et l'ouverture du moule **14** puis l'évacuation du récipient **2** formé ;
- (**700**) si la durée écoulée **Dec** est inférieure à la durée théorique **Dth**, laissant supposer l'existence d'une chambre **29** entre deux parois, le maintien du verrouillage du moule.

Calculer une durée revient à déterminer l'écart temporel entre deux instants. Il existe plusieurs moyens d'y parvenir qui sont à la portée de l'homme du métier. A titre d'exemple, l'unité **26** de contrôle peut effectuer un calcul ou un chronométrage entre deux instants qu'elle détecte (celui **Tdeg** du début de dégazage et celui **Teff1** ou **Teff** auquel la pression de référence **Pref** ou **PA** est atteinte).

On rappelle que par "mesure de pression au niveau du col", il faut entendre une mesure de la pression dans l'environnement qui contient le col **8**, afin que la mesure ne soit pas perturbée par une éventuelle déformation de la paroi **4** interne. Cette mesure est avantageusement effectuée par le capteur **25** associé à la tuyère **19** de soufflage (laquelle mesure s'avère être aisée à mettre en oeuvre).

On voit, dans l'exemple illustré sur la figure 6, les variations de pression dans le volume délimité par la paroi **4** interne d'un récipient normal et dans le volume correspondant d'un récipient défectueux.

Dans le cas d'un récipient **2** défectueux (courbe en trait plein pendant la phase **200** de dégazage sur la figure 6), la pression dans le volume délimité par la paroi **4** interne diminue plus rapidement pendant la phase **200** de dégazage que dans le cas d'un récipient **2** correctement formé (courbe en trait mixte). Cette diminution plus rapide de la pression témoigne constitue un indice de la présence d'un volume délimité par la paroi **4** interne réduit et d'une chambre **29** sous pression entre les parois **4** et **5.** Il est donc raisonnable de maintenir verrouillé le moule **14**, du moins tant que la pression dans l'ensemble du récipient **2**, c'est-à-dire dans le volume intérieur et dans la chambre **29**, n'a pas atteint la pression ambiante **PA** régnant autour de la machine de fabrication ou une pression de référence **Pref** légèrement supérieure mais à laquelle l'ouverture du moule peut être réalisée sans risque.

Dans une mise en oeuvre de l'invention, l'unité **26** de contrôle détermine l'instant effectif **Teff** auquel la pression au niveau du col atteint la pression ambiante **PA** qui constitue dons la pression de référence. Dans ce cas, la durée écoulée **Dec** est la durée entre l'instant **Tdeg** de début de dégazage et l'instant effectif **Teff** (en d'autres termes Dec = Teff - Tdeg). La durée écoulée **Dec** est alors comparée à la durée théorique (Dth = Tth - Tdeg) nécessaire pour que la pression dans le volume intérieur limité par la paroi **4** interne d'un récipient normalement formé redescende à la pression ambiante **PA.**

Dans une mise en oeuvre alternative, il est prédéterminé, grâce aux courbes de soufflage (cf. figure 6), d'une part une pression de référence **Pref**, comprise entre la pression **PS** de soufflage et la pression ambiante **PA**, d'autre part un instant théorique **Tth1** auquel cette pression de référence **Pref** est susceptible d'être atteinte lors du dégazage du volume intérieur limité par la paroi **4** interne d'un récipient normalement formé. L'unité **26** de contrôle détermine l'instant effectif **Teff1** auquel la pression au niveau du col **8** atteint cette pression de référence **Pref** et effectue alors les calculs et comparaisons appropriées. Comme ceci est visible sur la figure 6, si le récipient a un défaut, l'instant effectif **Teff1** sera antérieur à l'instant théorique **Tth1** et la durée écoulée (Dec = Teff1 - Tdeg) sera inférieure à la durée théorique (Dth1 = Tth1 - Tdeg) qui serait nécessaire pour que la pression dans le volume intérieur limité par la paroi **4** interne d'un récipient normalement formé redescende à la pression de référence **Pref.**

Cette mise en oeuvre permet d'anticiper quelque peu (de quelques fractions de secondes) la nécessité de verrouiller le moule ou pas.

Dans une variante, la pression de référence **Pref** est une pression, déterminée de façon théorique, à partir de laquelle il est possible d'ouvrir le moule sans risque de détérioration de ce dernier. Elle peut donc être légèrement supérieure à la pression ambiante. Sa valeur dépend du type de moule et de récipient.

De préférence, la détermination d'une durée écoulée **Dec** inférieure à une durée théorique **Dth** ou **Dth1**, laissant supposer l'existence d'une chambre **29** entre deux parois et entraînant le maintien du verrouillage, est accompagnée de l'arrêt d'urgence de l'unité **1** de formage ou de la totalité de la ligne de production dans laquelle cette unité **1** est implantée. Ceci devient nécessaire notamment lorsque cette unité **1** de formage est une machine de soufflage rotative ou lorsqu'elle est couplée à une ou plusieurs autres machines, telles qu'une unité de conditionnement thermique (four) en amont et/ou une remplisseuse en aval.

De préférence encore, la détermination d'une durée écoulée **Dec** inférieure à une durée théorique **Dth** ou **Dth1** provoque la génération d'un signal d'alerte. Celui-ci peut être visuel, en étant affiché sur une interface de communication équipant l'unité **1** de formage (ou tout autre élément de la ligne de production au sein de laquelle est intégrée l'unité **1**), par ex. sous forme d'un pictogramme ayant une forme et/ou une couleur caractéristique(s). Le message d'alerte peut également être sonore. Le signal d'alerte peut aussi être diffusé à la fois sous forme visuelle et sonore.

Comme il n'est pas envisageable de maintenir indéfiniment verrouillé le moule **14** concerné (et la souffleuse indéfiniment arrêtée), l'unité **26** de contrôle est avantageusement programmée pour retarder le déverrouillage de ce moule **14.**

Plus précisément, l'unité **26** de contrôle est programmée pour commander :

- le maintien du verrouillage du moule **14** pendant une temporisation prédéterminée,
- à la fin de cette temporisation, le déverrouillage et l'ouverture du moule **14.**

L'ouverture du moule **14** peut être manuelle, comme l'évacuation du récipient **2** présumé défectueux.

La durée de la temporisation peut être prédéterminée, par ex. de l'ordre d'une minute, temps assez long pour que le dégazage de la chambre **29** soit achevé avec certitude. En effet, il est rare que la lumière **28** soit totalement obturée et il subsiste généralement une fuite au travers de celle-ci permettant le vidage de la chambre. En outre, lorsque le récipient comporte un orifice **10** dans sa paroi **5** externe, celui-ci aussi contribue au dégazage de la chambre **29**. Selon les cas (en pratique, selon la capacité volumique du récipient **2**), on estime qu'une temporisation supérieure ou égale à 30 secondes est suffisante.

Il est également possible de mettre à profit la présence de l'orifice **10** ménagé dans le fond de la paroi **5** externe, lorsque cet orifice **10** existe, afin de réduire la durée du verrouillage au minimum.

En effet, il est envisageable de pourvoir le fond **16** de moule d'un capteur de pression apte à mesurer une pression dans l'orifice **10**. Lorsque le formage se déroule normalement, cette pression est la pression ambiante (typiquement la pression atmosphérique). Par contre si de l'air sous pression s'est introduit entre les deux parois, ce capteur, par exemple relié à l'unité **26** de contrôle, mesurera une pression résiduelle dans l'orifice tant que la chambre **29** ne sera pas vide. Lorsque la pression dans l'orifice sera revenue à la pression ambiante ou aura atteint une pression de référence (témoignant de la fin de la vidange de la chambre **29** ou de l'atteinte d'une pression acceptable), le déverrouillage du moule pourra être provoqué.

Alternativement, au lieu d'un capteur de pression, il est possible de prévoir un capteur de débit du gaz sortant de l'orifice. Pour cela, le fond de moule doit être pourvu d'un passage permettant une éventuelle fuite du gaz par l'orifice. Lorsque le formage s'est déroulé normalement, aucun résiduel de gaz ne s'échappe pendant le dégazage et aucun débit de fuite ne peut être mesuré. Par contre si de l'air sous pression s'est introduit entre les deux parois, ce capteur, par exemple relié à l'unité **26** de contrôle, mesurera un débit de fuite à l'orifice tant que la chambre ne sera pas vide. Lorsqu'aucun débit n'est détecté, (témoignant de la fin de la vidange de la chambre **29**), le déverrouillage du moule pourra être provoqué.

Cette solution peut gagner du temps de production en minimisant le temps d'immobilisation de l'unité **1** de formage au strict nécessaire à l'égalisation des pressions à l'intérieur et à l'extérieur du récipient **2** présumé défectueux. Le déverrouillage peut être provoqué dès lors que la mesure de pression ou de débit indique que la pression est descendue à une valeur acceptable ou que la vidange de la chambre **29** est achevée.

**Revendications**

1. Procédé de formage d'un récipient (**2**) comprenant un col (**8**) ouvert, par soufflage ou étirage soufflage d'une préforme (**3**) à parois multiples en matière plastique, ledit procédé comprenant :

   - une opération de mise en place de la préforme (**3**) dans un moule (**14**) à l'empreinte du récipient (**2**), ce moule (**14**) comprenant au moins deux demi-moules (**14A**, **14B**) pouvant occuper une position fermée dans laquelle les demi-moules (**14A**, **14B**) sont assemblés ;
   - une opération de verrouillage des demi-moules (**14A**, **14B**) en position fermée ;
   - une phase de soufflage consistant à mettre l'intérieur de la préforme (**3**) en communication avec une source (**20**, **21**) de gaz sous pression par l'intermédiaire de l'ouverture ménagée dans son col (**8**), pendant une durée prédéterminée, pour former le récipient (**2**), par application d'au moins une pression (**PS**) de soufflage ;
   - une phase de dégazage débutant à un instant (**Tdeg**) de début de dégazage, et consistant en la mise en communication du récipient (**2**) ainsi formé avec le milieu à la pression ambiante (**PA**) afin de ramener la pression dans le récipient à la pression ambiante ;

ce procédé étant **caractérisé en ce qu'**il comprend en outre :

   - une mesure (**300**) continue de la pression régnant au niveau du col (**8**) pendant la phase de dégazage ;
   - la détermination (**400**) de la durée écoulée (**Dec**) entre le début du dégazage et l'atteinte d'une pression de référence (**Pref** ; **PA**) au niveau du col (**8**) ;
   - la comparaison (**500**) de la durée écoulée avec une durée théorique (**Dth**) à partir de laquelle la pression au niveau du col (**8**) atteint en théorie la pression de référence (**Pref** ; **PA**) ;
   - le maintien (**700**) du verrouillage du moule si la durée écoulée (**Dec**) est inférieure à la durée théorique (**Dth**).

2. Procédé selon la revendication 1, **caractérisé en ce que** la pression de référence (**Pref**) est égale à la pression ambiante (**PA**), soit

$$\mathrm{Pref} = \mathrm{PA}.$$

3. Procédé selon la revendication 1, **caractérisé en ce que** la pression de référence (**Pref**) est comprise entre la pression (**PS**) de soufflage et la pression ambiante (**PA**), soit

$$\mathrm{PS} > \mathrm{Pref} > \mathrm{PA}.$$

4. Procédé selon la revendication 3, **caractérisé en ce que** la pression de référence (**Pref**) est une pression, déterminée de façon théorique, à partir de laquelle il est possible d'ouvrir le moule sans risque de détérioration de ce dernier

5. Procédé selon l'une des revendications 1 à 4, **caractérisé en ce que** si la durée écoulée (**Dec**) est inférieure à la durée théorique (**Dth**), il est provoqué la génération d'un signal d'alerte.

6. Procédé selon l'une des revendications 1 à 5, **caractérisé en ce qu'**il est mis en oeuvre dans une l'unité (**1**) de formage et si la durée écoulée (**Dec**) est inférieure à la durée théorique (**Dth**), il est provoqué un arrêt d'urgence de l'unité (**1**) de formage.

**7.** Procédé selon l'une des revendications 1 à 6, **caractérisé en ce qu'**il comprend, si la durée écoulée (**Dec**) est inférieure à la durée théorique (**Dth**) :

- le maintien du verrouillage du moule (**14**) pendant une temporisation prédéterminée,
- à la fin de la temporisation, le déverrouillage et l'ouverture du moule (**14**).

**8.** Procédé selon la revendication 7, **caractérisé en ce que** la temporisation est supérieure ou égale à 30 secondes.

**9.** Procédé selon la revendication 8, **caractérisé en ce que** la temporisation est d'une minute environ.

**10.** Procédé selon l'une des revendications 1 à 6, **caractérisé en ce que** le récipient comprenant une paroi interne et une paroi externe, cette dernière étant pourvue d'un orifice (**10**) de mise en communication avec l'extérieur, si la durée écoulée (**Dec**) est inférieure à la durée théorique (**Dth**), la pression à l'orifice est mesurée et lorsque la pression à l'orifice atteint la pression de référence (**PA** ; **Pref**) un déverrouillage du moule est provoqué.

**11.** Procédé selon l'une des revendications 1 à 6, **caractérisé en ce que** le récipient comprenant une paroi interne et une paroi externe, cette dernière étant pourvue d'un orifice de mise en communication avec l'extérieur, si la durée écoulée (**Dec**) est inférieure à la durée théorique (**Dth**), il est mesuré le débit du gaz sortant de l'orifice et lorsque ce débit devient nul, un déverrouillage du moule est provoqué.

**Patentansprüche**

**1.** Verfahren zum Formen eines einen offenen Hals (8) aufweisenden Behälters (2) durch Blasformen oder Streckblasformen eines Vorformlings (3) mit mehreren Wänden aus Kunststoffmaterial, wobei das Verfahren Folgendes umfasst:

- einen Vorgang des Anordnens des Vorformlings (3) in einer Form (14) mit der Kontur des Behälters (2), wobei diese Form (14) mindestens zwei Formhälften (14A, 14B) umfasst, die eine geschlossene Position einnehmen können, in der die Formhälften (14A, 14B) zusammengefügt sind;
- einen Vorgang des Verriegelns der Formhälften (14A, 14B) in der geschlossenen Position;
- eine Blasformphase, die darin besteht, das Innere des Vorformlings (3) für eine vorbestimmte Zeitdauer durch die in seinem Hals (8) ausgebildete Öffnung mit einer Druckgasquelle (20, 21) in Verbindung zu setzen, um den Behälter (2) zu bilden, indem mindestens ein Blasdruck (PS) angelegt wird;
- eine Entgasungsphase, die zu einem Anfangszeitpunkt (Tdeg) der Entgasung beginnt und darin besteht, den so gebildeten Behälter (2) mit der Umgebung auf Umgebungsdruck (PA) in Verbindung zu setzen, um den Druck in dem Behälter auf den Umgebungsdruck zu bringen;

wobei das Verfahren **dadurch gekennzeichnet ist, dass** es ferner Folgendes umfasst:

- ein kontinuierliches Messen (300) des am Hals (8) herrschenden Drucks während der Entgasungsphase;
- das Bestimmen (400) der verstrichenen Zeitdauer (Dec) zwischen dem Beginn der Entgasung und dem Erreichen eines Referenzdrucks (Pref; PA) am Hals (8) ;
- das Vergleichen (500) der verstrichenen Zeitdauer mit einer theoretischen Zeitdauer (Dth), ab der der Druck am Hals (8) theoretisch den Referenzdruck (Pref; PA) erreicht;
- das Verriegelthalten (700) der Form, wenn die verstrichene Zeitdauer (Dec) unter der theoretischen Zeitdauer (Dth) liegt.

**2.** Verfahren nach Anspruch 1, **dadurch gekennzeichnet, dass** der Referenzdruck (Pref) gleich dem Umgebungsdruck (PA) ist, d. h. Pref = PA.

**3.** Verfahren nach Anspruch 1, **dadurch gekennzeichnet, dass** der Referenzdruck (Pref) zwischen dem Blasdruck (PS) und dem Umgebungsdruck (PA) liegt, d. h. PS > Pref > PA.

**4.** Verfahren nach Anspruch 3, **dadurch gekennzeichnet, dass** der Referenzdruck (Pref) ein theoretisch bestimmter Druck ist, ab dem es möglich ist, die Form zu öffnen, ohne dass die Gefahr einer Beeinträchtigung der letzteren besteht.

**5.** Verfahren nach einem der Ansprüche 1 bis 4, **dadurch gekennzeichnet, dass**, wenn die verstrichene Zeitdauer (Dec) unter der theoretischen Zeitdauer (Dth) liegt, die Erzeugung eines Warnsignals bewirkt wird.

**6.** Verfahren nach einem der Ansprüche 1 bis 5, **dadurch gekennzeichnet, dass** es in einer Formeinheit (1) durchgeführt wird, und wenn die verstrichene Zeitdauer (Dec) unter der theoretischen Zeitdauer (Dth) liegt, eine Notabschaltung der Formeinheit (1) bewirkt wird.

**7.** Verfahren nach einem der Ansprüche 1 bis 6, **dadurch gekennzeichnet, dass** es, wenn die verstrichene Zeitdauer (Dec) unter der theoretischen Zeitdauer (Dth) liegt, Folgendes umfasst:

- das Verriegelthalten der Form (14) während einer vorbestimmten Verzögerungszeit,
- am Ende der Verzögerungszeit das Entriegeln und das Öffnen der Form (14).

8. Verfahren nach Anspruch 7, **dadurch gekennzeichnet, dass** die Verzögerungszeit größer oder gleich 30 Sekunden ist.

9. Verfahren nach Anspruch 8, **dadurch gekennzeichnet, dass** die Verzögerungszeit ca. eine Minute beträgt.

10. Verfahren nach einem der Ansprüche 1 bis 6, **dadurch gekennzeichnet, dass** bei dem Behälter, der eine Innenwand und eine Außenwand umfasst, wobei letztere mit einer Öffnung (10) zur Verbindung mit dem Außenraum versehen ist, wenn die verstrichene Zeitdauer (Dec) unter der theoretischen Zeitdauer (Dth) liegt, der Druck an der Öffnung gemessen wird, und wenn der Druck an der Öffnung den Referenzdruck (PA; Pref) erreicht, ein Entriegeln der Form bewirkt wird.

11. Verfahren nach einem der Ansprüche 1 bis 6, **dadurch gekennzeichnet, dass** bei dem Behälter, der eine Innenwand und eine Außenwand umfasst, wobei letztere mit einer Öffnung zur Verbindung mit dem Außenraum versehen ist, wenn die verstrichene Zeitdauer (Dec) unter der theoretischen Zeitdauer (Dth) liegt, der Durchsatz des die Öffnung verlassenden Gases gemessen wird, und wenn dieser Durchsatz null wird, ein Entriegeln der Form bewirkt wird.

**Claims**

1. Method for forming a container (2) comprising an open neck (8), by blowing or by stretching and blowing a preform (3) with multiple walls made of plastic material, said method comprising:

- an operation of placement of the preform (3) in a mould (14) with the dye of the container (2), this mould (14) comprising at least two half-moulds (14A, 14B) that can occupy a closed position in which the half-moulds (14A, 14B) are joined;
- an operation of locking of the half-moulds (14A, 14B) in closed position;
- a blowing phase consisting in connecting the interior of the preform (3) with a source (20, 21) of pressurized gas via the opening formed in its neck (8), for a predetermined time, to form the container (2), by application of at least one blowing pressure (PS);
- a breathing phase beginning at an instant (Tdeg) of start of breathing, and consisting in connection of the duly formed container (2) with the environment at ambient pressure (PA) in order to return the pressure in the container to ambient pressure;

this method being **characterized in that** it further comprises:

- a continuous measurement (300) of the pressure prevailing at the neck (8) during the breathing phase;
- the determination (400) of the elapsed time (Dec) between the start of breathing and the reaching of a reference pressure (Pref; PA) at the neck (8);
- the comparison (500) of the elapsed time with a theoretical time (Dth) from which the pressure at the neck (8) theoretically reaches the reference pressure (Pref; PA);
- the maintaining (700) of the locking of the mould if the elapsed time (Dec) is less than the theoretical time (Dth).

2. Method according to Claim 1, **characterized in that** the reference pressure (Pref) is equal to ambient pressure (PA),
i.e.

$$Pref = PA.$$

3. Method according to Claim 1, **characterized in that** the reference pressure (Pref) lies between the blowing pressure (PS) and the ambient pressure (PA),
i.e.

$$PS > Pref > PA.$$

4. Method according to Claim 3, **characterized in that** the reference pressure (Pref) is a pressure, determined theoretically, from which it is possible to open the mould without risk of damage thereto.

5. Method according to one of Claims 1 to 4, **characterized in that** if the elapsed time (Dec) is less than the theoretical time (Dth), the generation of an alert signal is induced.

6. Method according to one of Claims 1 to 5, **characterized in that** it is implemented in a forming unit (1) and if the elapsed time (Dec) is less than the theoretical time (Dth), an emergency shutdown of the forming unit (1) is induced.

7. Method according to one of Claims 1 to 6, **characterized in that** it comprises, if the elapsed time (Dec) is less than the theoretical time (Dth):

   - the maintaining of the locking of the mould (14) for a predetermined time delay,
   - at the end of the time delay, the unlocking and the opening of the mould (14).

8. Method according to Claim 7, **characterized in that** the time delay is greater than or equal to 30 seconds.

9. Method according to Claim 8, **characterized in that** the time delay is approximately one minute.

10. Method according to one of Claims 1 to 6, **characterized in that**, the container comprising an inner wall and an outer wall, the latter being provided with an orifice (10) connecting with the outside, if the elapsed time (Dec) is less than the theoretical time (Dth), the pressure at the orifice is measured and, when the pressure at the orifice reaches the reference pressure (PA; Pref), an unlocking of the mould is induced.

11. Method according to one of Claims 1 to 6, **characterized in that**, the container comprising an inner wall and an outer wall, the latter being provided with an orifice connecting with the outside, if the elapsed time (Dec) is less than the theoretical time (Dth), the flow rate of the gas outgoing from the orifice is measured and, when this flow rate becomes nil, an unlocking of the mould is induced.

FIG.1

FIG.2

# FIG.3

FIG.4

EP 3 238 911 B1

FIG.5

FIG.6

**RÉFÉRENCES CITÉES DANS LA DESCRIPTION**

**Documents brevets cités dans la description**

- WO 2016009131 A
- JP S57128518 A
- US 2006121152 A1
- US 20150108077 A